# EUROPÄISCHE PATENTANMELDUNG

(11) **EP 4 841 374 A2**
(43) Veröffentlichungstag der Anmeldung: **18.11.2026**
(21) Anmeldenummer: 26178450.8
(22) Anmeldetag: 13.05.2026
(51) Int. Cl.: G05B 19/409, B23Q 1/00, B23Q 17/24

(54) **OPTISCHER FUSSSCHALTER ZUR TISCH-BELEGUNG BEI CNC HOLZBEARBEITUNGSMASCHINEN**

(30) Priorität: 14.05.2025 DE 102025118566
(71) Anmelder: HOMAG GmbH, 72296 Schopfloch (DE)
(72) Erfinder: Rail, Waldemar, 72280 Dornstetten (DE); Sturm, Christian, 72202 Nagold (DE)
(74) Vertreter: Hoffmann Eitle

(57) **Zusammenfassung**

Die Erfindung betrifft eine Vorrichtung zum Be- und/oder Verarbeiten von Werkstücken, die zumindest abschnittsweise aus Holz, Holzwerkstoffen, Kunststoffen oder dergleichen bestehen, mit:
- einem Eingabemittel, um ein Körperteil eines Benutzers und/oder das Werkstück kontaktlos zu erfassen,
wobei die Vorrichtung dazu ausgestaltet ist, basierend auf der Erfassung eine Betätigung auszuführen.

## Beschreibung

### Technisches Gebiet

Die vorliegende Erfindung betrifft eine Vorrichtung zum Be- und/oder Verarbeiten von Werkstücken, die zumindest abschnittsweise aus Holz, Holzwerkstoffen, Kunststoffen oder dergleichen bestehen. Sie betrifft auch ein entsprechendes Verfahren.

### Stand der Technik

Im Bereich der Holzbe- und -verarbeitung werden CNC-Maschinen eingesetzt, bei denen Werkstücke auf Aufspanntischen angeordnet werden, um dort verarbeitet zu werden. Um die Positionierung der Werkstücke durch Mitarbeiter zu erleichtern, werden Anschlagstößel ausgefahren, gegen die das Werkstück von den Mitarbeitern angelegt wird. Diese Stößel werden im Stand der Technik durch Fußschalter aktiviert, da die Mitarbeiter ihre Hände für das Positionieren der Werkstücke frei haben sollen. Ebenso werden diese Stößel durch Fußschalter deaktiviert und es wird auch über Fußschalter die Werkstückspannung aktiviert bzw. gelöst. Über die Fußschalter werden auch andere Funktionen aktiviert wie Einlegehilfen etc.

Typischerweise ist pro Aufspannfeld ein Schalter vorhanden. Wenn beispielsweise an einer Maschine vier Aufspannplätze vorhanden sind, sind auch vier Schalter vorgesehen. Aus Gründen der Ergonomie sind die Schalter meistens als Schaltleisten ausgebildet, die unterhalb der jeweiligen Aufspannplätze angeordnet sind. Es ist jedoch prinzipiell auch möglich, Einzelschalter zu verwenden, die jedoch weniger benutzerfreundlich sind.

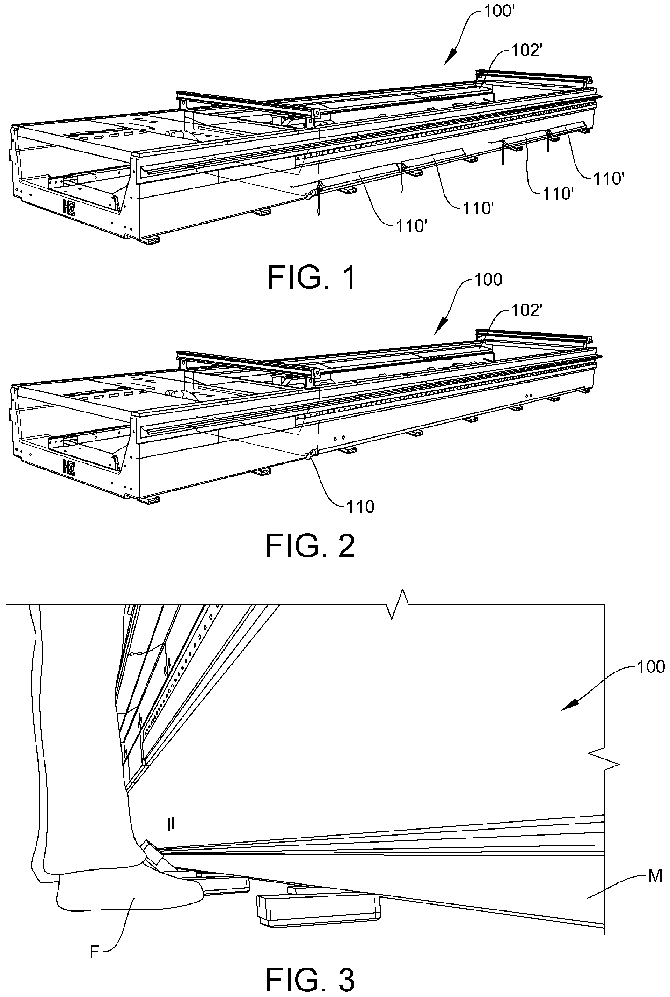

Eine entsprechende Vorrichtung aus dem Stand der Technik ist in der Figur 1 dargestellt. Diese Vorrichtung 100' weist eine Aufspannfläche 102' auf, auf der ein Werkstück angeordnet werden kann. Zur Aktivierung der Vorrichtung 100' sind an der Unterseite der Vorrichtung 100' Fußschalter 110' vorgesehen. Diese können durch den Bediener mit den Füßen aktiviert werden. Da die Fußschalter 110' so vorgesehen sind, dass sie durch die Füße des Bedieners aktiviert werden können, besteht die Möglichkeit, eine solche Vorrichtung 100' freihändig zu bestücken, ohne dass dieser die Hände für das Aktivieren von Funktionen der Vorrichtung verwenden muss.

Ein Nachteil einer solchen Ausgestaltung ist jedoch, dass solche Fußschalter 110' lokal an einem Punkt der Vorrichtung 100' befestigt sind. Somit ist der Bediener an die Position des Fußschalters 110' gebunden und somit räumlich in der Bearbeitung des Werkstücks eingeschränkt. Des weiteren ist es nötig, pro Aufspannplatz einen solchen Fußschalter 110' zu verbauen, was die Kosten erhöht. Auch ist die Konfiguration der Fußschalter 110' an die geplante Verwendung der Maschine gebunden - wenn man CNC-Maschine anderweitig verwenden will, muss man oft auch die Fußschalter 110' umkonfigurieren. Des weiteren ist es nötig, pro Aufspannplatz einen Fußschalter 110' zu verwenden, was zu erhöhten Kosten führt. Ferner müssen solche Fußschalter 110', insbesondere wenn diese als Leisten ausgebildet sind, entfernt werden, wenn Transporteinrichtungen angebracht werden, um die CNC-Maschine zu transportieren.

Als Alternative zu solchen Schaltleisten werden auch positionsverändernde Schalteinrichtungen angedacht. Allerdings stellt die manuelle Positionsveränderung einer solchen produktionsveränderbaren Einrichtung eine zeitliche Verzögerung im Produktionsablauf dar, die es zu vermeiden gilt. Die Idee eines automatischen Positionsänderungssystems, um dieses Problem zu vermeiden, wird beispielsweise in der AT 502 842 A1 beschrieben. Solche Systeme vermeiden zwar die Notwendigkeit der manuellen Positionseinstellung, sind jedoch technisch aufwendig zu realisieren. Sie sind ferner wartungsanfällig und somit ebenfalls ein Kostenfaktor.

### Darstellung der Erfindung

Es ist ein Bedürfnis, eine Vorrichtung zum Be- und/oder Verarbeiten von Werkstücken bereitzustellen, welche zumindest einige der oben genannten Nachteile lindert oder behebt.

Die Erfindung wird durch die Vorrichtung und das Verfahren nach den unabhängigen Ansprüchen definiert. Bevorzugte Ausführungsformen werden in den abhängigen Ansprüchen definiert.

Erfindungsgemäß wird eine Vorrichtung zum Be- und/oder Verarbeiten von Werkstücken, die zumindest abschnittsweise aus Holz, Holzwerkstoffen, Kunststoffen oder dergleichen bestehen, beansprucht. Bei solchen Werkstücken handelt es sich typischerweise um Werkstücke, die später in Einrichtungsgegenständen, beispielsweise Möbeln, verwendet werden.

Die Vorrichtung weist ein Eingabemittel auf, um ein Körperteil, bevorzugt die unteren Extremitäten, insbesondere einen Fuß oder Knie eines Benutzers oder aber ein Werkstück kontaktlos zu erfassen (wobei die Erfassung eines Körperteils bevorzugt ist, welches präferiert eine untere Extremität, insbesondere ein Fuß oder Knie, ist). Dieses Eingabemittel ist somit dazu ausgestaltet, das Körperteil eines Benutzers oder das Werkstück kontaktlos zu erfassen. Unter einer kontaktlosen Erfassung kann eine Erfassung mithilfe einer optischen Einrichtung verstanden werden. Es ist jedoch auch möglich andere Erfassungsmethoden, beispielsweise durch Verwendung von Ultraschall, Laserlicht, Radar o.ä. zu verwenden. Dadurch, dass ein Fuß oder das Werkstück kontaktlos erfasst werden kann, ist es nicht nötig, dass das Eingabemittel an der gleichen Position angeordnet ist, an der das Körperteil des Benutzers (beispielsweise der Fuß) auf die Vorrichtung einwirkt. Es ergibt sich somit ein größerer Gestaltungsspielraum, so dass man darauf verzichten kann, pro Aufspannplatz bzw. Verarbeitungsplatz einen Schalter vorzusehen. Wenn man das Werkstück durch das Erfassungsmittel erfasst, ergibt sich hieraus als Vorteil, dass man keinen Schalter o.ä. separat aktivieren muss, was neben den o.a. Vorteilen auch den Vorteil hat, dass die Tätigkeit erleichtert wird. Hierbei umfasst der Begriff "Körperteil" bekleidete und unbekleidete bzw. beschuhte Körperteile, so dass das Eingabemittel ein Körperteil des Benutzers auch dann erfassen kann, wenn es durch Kleidung und/oder Schuhe zumindest teilweise bedeckt ist.

Die Vorrichtung ist dazu ausgestaltet, basierend auf der Erfassung eine Betätigung auszuführen. Anders gesagt wird die Vorrichtung basierend auf der Erfassung aktiviert und führt somit eine Betätigung durch. Eine solche Betätigung kann beispielsweise daraus bestehen, dass ein Werkzeugwechsler bestückt wird, dass eine Übergabe oder Entnahme eines Objekts quittiert wird. Alternativ kann somit das Durchführen einer Aktion bestätigt bzw. abgeschlossen werden oder das Nachfüllen oder Bestücken eines Kantenmagazinbehälters ausgelöst werden. Alternativ ist es auch möglich, dass beispielsweise ein Fahrständer in Bewegung gesetzt wird, beispielsweise in eine Richtung, die durch einen Benutzer durch das Körperteil oder das Werkstück in Form einer Wischbewegung angegeben wird und es können Bewegungen von Maschinenkomponenten ausgelöst werden, oder aber Verriegelungen, beispielsweise von Sicherheitshauben vor der Verarbeitung, ausgelöst werden. Es ist somit möglich, eine Vielzahl an Betätigungen auszuführen. Diese Betätigungen unterscheiden sich von einer Not-Ausschaltvorrichtung, wie dies beispielsweise durch eine Lichtschranke der Fall wäre, wo eine Vorrichtung deaktiviert wird - im Gegensatz hierzu werden erfindungsgemäß Betätigungen durchgeführt und die Vorrichtung somit gerade nicht deaktiviert.

Bevorzugt ist die Vorrichtung dazu ausgestaltet, eine Position eines Körperteils oder des Werkstücks (bevorzugt des Körperteils) entlang der Vorrichtung zu erfassen. Somit können je nach erfasster Position verschiedene Betätigungen ausgeführt werden. Beispielsweise kann eine Betätigung ausgeführt werden, die an einer Position erfolgt, die der Position des Körperteils/des Werkstücks entspricht oder zumindest mit der Position korreliert. Hierdurch wird die Flexibilität in der Benutzung erhöht.

In diesem Zusammenhang wird bevorzugt, dass die Vorrichtung dazu ausgestaltet ist, verschiedene Bewegungsmuster des Körperteils/des Werkstücks (bevorzugt des Körperteils) zu erfassen, um somit verschiedene Betätigungen der Vorrichtung durchzuführen. Dies kann beispielsweise dadurch geschehen, dass ein Wischen des Fußes (oder auch des Werkstücks) nach rechts und nach links erfasst wird und somit eine nach rechts gerichtete bzw. nach links gerichtete Bewegung der Vorrichtung ausführt. Es ist jedoch auch möglich, beliebige andere Bewegungsmuster des Körperteils/Fußes zu erkennen, um somit die Steuerbarkeit der Vorrichtung zu erhöhen. So kann beispielsweise ein erstes Eindringen des Körperteils/Fußes an einem Ort und ein zweites Eindringen des Körperteils/Fußes kurz danach an einem anderen Ort, der rechts oder links vom ersten Ort ist, eine Bewegung nach rechts bzw. links instruieren.

Weiterhin wird bevorzugt, dass das Eingabemittel dazu ausgestaltet ist, das Eindringen des Körperteils/des Werkstücks (bevorzugt des Körperteils) in einen definierten Raum zu erfassen. Eine solche Erfassung ist leicht implementierbar und insbesondere auch leicht für einen ungeübten Benutzer durchführbar.

In diesem Zusammenhang wird bevorzugt, dass die Vorrichtung nur dann eine Betätigung ausführt, wenn das Eindringen in den definierten Raum über einen Zeitraum folgt, der länger ist als ein definierter Schwellenwert. Somit kann ein unbeabsichtigtes Eindringen, beispielsweise aufgrund der Unbeholfenheit eines Benutzers oder einer Fehlbedienung, ignoriert werden. Alternativ und/oder zusätzlich wird die Betätigung nur dann ausgeführt, wenn die Größe des in den definierten Raum eindringenden Objekts eine definierte Mindestgröße überschreitet. Somit kann beispielsweise das Eindringen des Fußes eines Benutzers/des Werkstücks vom Eindringen von Staub oder Holzspänen oder anderen kleinen Partikeln unterschieden werden.

Bevorzugt ist die Vorrichtung dazu ausgestaltet, mindestens ein erstes Werkstück zu be- und/oder verarbeiten, das an einer Arbeitsfläche der Vorrichtung angeordnet ist. Die Vorrichtung ist dazu ausgestaltet, bei einer Erfassung des Körperteils/des Werkstücks (bevorzugt des Körperteils) in einem ersten Bereich, der dem ersten Werkstück zugeordnet ist, eine Betätigung durchzuführen, die dem ersten Werkstück zugeordnet ist. Somit kann dann, wenn der Benutzer in einen Bereich, der dem ersten Werkstück entspricht, mit dem Körperteil oder dem Werkstück eindringt, dieses Werkstück bearbeitet werden bzw. die Vorrichtung so aktiviert werden, dass sie eine Betätigung durchführt, die einen Bezug auf das erste Werkstück hat.

Bevorzugt hat der erste Bereich eine Erstreckung, die mit einer Abmessung des ersten Werkstücks korreliert. Eine solche Ausgestaltung der Vorrichtung ist besonders nutzerfreundlich.

Weiterhin wird bevorzugt, dass die Vorrichtung auch dazu ausgestaltet ist, mindestens ein zweites Werkstück zu be- und/oder verarbeiten, welches auch an einer Arbeitsfläche der Vorrichtung angeordnet ist, die sich von der Fläche unterscheidet, an der das erste Werkstück angeordnet ist. Hierbei ist die Vorrichtung dazu ausgestaltet, bei einer Erfassung des Körperteils/des Werkstücks in einem zweiten Bereich, der dem zweiten Werkstück zugeordnet ist, eine Betätigung durchzuführen, die dem zweiten Werkstück zugeordnet ist. Somit kann, je nachdem, in welchen Bereich durch das Körperteil/das Werkstück eingedrungen wird, das erste oder zweite Werkstück bearbeitet werden. Somit ist eine Flexibilität der Vorrichtung erhöht. Die beiden ersten und zweiten Bereiche sind voneinander verschieden, sodass es der Vorrichtung leicht möglich ist, zwischen einer Aktivierung der ersten und der zweiten Betätigung zu unterscheiden. Bevorzugt hat der zweite Bereich eine Erstreckung, die mit einer Abmessung des zweiten Werkstücks korreliert, was die Benutzerfreundlichkeit erhöht.

Bevorzugt sind der erste und der zweite Bereich voneinander beabstandet. Dies erhöht die Benutzerfreundlichkeit und vermeidet es, dass aus Versehen die erste Betätigung oder die zweite Betätigung aktiviert wird, wenn die jeweils andere aktiviert werden soll.

Es ist weiterhin bevorzugt, die Vorrichtung so auszugestalten, dass die ersten und zweiten Bereiche in ihren Abmessungen autonom (dynamisch) basierend auf den Abmessungen der ersten und/oder zweiten Werkstücke angepasst werden. Hierdurch ist es möglich, die Vorrichtung flexibel an die verschiedenen Abmessungen von Werkstücken anzupassen, ohne dass ein Benutzer eine separate Betätigung der Vorrichtung durchführen muss. Insofern erfolgt diese Anpassung durch die Steuerung, ohne dass der Benutzer selbst tätig werden muss, und auch während des Betriebs der Vorrichtung.

Bevorzugt umfasst die Betätigung, die den ersten und/oder zweiten Werkstücken zugeordnet ist, eine Be- und/oder Verarbeitung des ersten und/oder zweiten Werkstücks oder eine Veränderung der physischen Konfiguration der Vorrichtung, um einer Be- und/oder Verarbeitung des ersten und/oder zweiten Werkstücks durchzuführen. Hierdurch wird insbesondere umfasst, dass das erste und/oder zweite Werkstück auf irgendeine Art und Weise verändert wird, oder aber, dass sich die Vorrichtung in ihrer physischen Ausgestaltung verändert, beispielsweise durch das Ausfahren von Stiften, um Werkstücke zu positionieren.

Bevorzugt umfasst das Eingabemittel einen Abstandssensor, bevorzugt einen Abstandssensor unter Verwendung eines Lasers, von Ultraschall oder Radar. Ein solches Eingabemittel ist leicht zu implementieren.

Bevorzugt weist die Vorrichtung ferner eine Einrichtung auf, die eine Erfassung des Körperteils/des Werkstücks sensorisch, bevorzugt optisch und/oder akustisch ausgibt. Da vorliegend keine Schalter vorgesehen sind, auf die mechanisch eingewirkt wird, gibt es nicht die einem mechanischen Schalter inhärente Rückmeldung, dass dieser betätigt wurde. Es ist daher für die Benutzerfreundlichkeit von Vorteil, eine Erfassung des Körperteils sensorisch erfassbar und insbesondere optisch und/oder akustisch auszugeben. Hierbei werden insbesondere für verschiedene Betätigungen verschiedene sensorische Ausgaben erzeugt, so dass ein Benutzer anhand der Ausgabe erkennen kann, welche Betätigung ausgeführt wird. Es ist auch möglich, dass diese Rückmeldung direkt durch die ausgeführte Aktion erfolgt.

Weiter erfindungsgemäß ist ein Verfahren, welches entsprechend der Vorrichtung ausgestaltet ist, wie dies in den Verfahrensansprüchen definiert ist. Ein entsprechendes Verfahren weist die, bezüglich der Vorrichtungsansprüche genannten, Vorteile auf.

### Kurze Beschreibung der Zeichnungen

- Figur 1: zeigt eine Bearbeitungsvorrichtung gemäß dem Stand der Technik.
- Figur 2: zeigt eine Bearbeitungsvorrichtung gemäß einer Ausführungsform der Erfindung.
- Figur 3: zeigt ein Detail der Vorrichtung gemäß der Ausführungsform der Erfindung.
- Figur 4: zeigt eine Detailansicht einer Vorrichtung gemäß der Erfindung.
- Figur 5: zeigt eine Bearbeitungsvorrichtung gemäß einer Ausführungsform der Erfindung.
- Figur 6: zeigt eine Bearbeitungsform gemäß einer Ausführungsform der Erfindung.
- Figur 7: zeigt eine Vorrichtung gemäß einer modifizierten Ausführungsform der Erfindung.
- Figur 8: zeigt eine Vorrichtung gemäß einer zweiten modifizierten Ausführungsform der Erfindung.
- Figur 9: zeigt ein Ablaufdiagramm für ein Verfahren gemäß einer Ausführungsform der Erfindung.

### Beschreibung von Ausführungsformen

Figur 2 zeigt eine Vorrichtung 100 gemäß einer Ausführungsform der Erfindung. Eine Vorrichtung 100 weist ein Aufspannfläche 102 auf, auf die Werkstücke, die zu bearbeiten sind, aufgelegt werden können, um dort verarbeitet zu werden. An der Unterseite der Vorrichtung 100 ist ein Distanzsensor 110 vorgesehen. Dieser Sensor 110 misst den Abstand zu einem in den Aktivierungsbereich eindringenden Fuß. Ein solcher Sensor kann beispielsweise durch den DT35-Sensor der Firma Sick realisiert werden. Es sind jedoch auch andere Modelle und Hersteller möglich.

Wie in der Figur 3 dargestellt ist, kann ein Benutzer eng an die Vorrichtung 100 herantreten und kann dann wie gewünscht mit dem Fuß F in den Bereich eindringen, der durch den Sensor 110 erfasst werden kann. Hierdurch kann eine beliebige Aktivierung der Vorrichtung 100 durchgeführt werden. Der Benutzer kann beispielsweise die Vorrichtung dadurch aktivieren, dass die Fußspitze leicht nach oben bewegt wird, um somit einen Laserstrahl eines Distanzsensors zu unterbrechen. Dieser Laserstrahl läuft bevorzugt hinreichend weit oberhalb des Bodens, um eine ungewollte Aktivierung zu vermeiden, jedoch tief genug, um eine Aktivierung nicht unnötig zu erschweren. Beispielsweise kann dieser mit einem Abstand von 12 cm parallel zum Boden verlaufen. Die erfindungsgemäße Idee ist aber nicht nur auf Laser-Licht eingeschränkt. Das könnte z.B. auch mit einem Radar-Sensor realisiert werden.

In einem weiteren Ausführungsbeispiel kann die kontaktlose Schaltereinrichtung eine Serienschaltung von elektromagnetischen Spulen in Fußhöhe am Maschinenrahmen umfassen. Der Bediener trägt üblicherweise Schuhe mit einer Stahlkappe. Somit könnte der Fuß des Bedieners bei jener Spule erkannt und angenommen werden, wo das elektromagnetische Feld am stärksten durch die Annäherung der Stahlkappe des Schuhs verändert wird. Eine Alternative zu der Stahlkappe im Schuh ist eine im Kniebereich einer Hose des Bedieners eingenähtes Stahlteil, um mit dem Knie bei einem elektromagnetischen Feld schalten zu können. Als Stahl wird bevorzugt ein unlegierter und ferritischer oder martensitischer Edelstahl (z.B. AISI 430, 410) verwendet.

Es ist auch möglich, den Sensor auf einem Schlitten anzubringen, so dass er vertikal verfahrbar ist. Auf diese Weise kann er wie gewünscht in der Höhe angepasst werden, um auf die Präferenzen eines Benutzers einzugehen. Besonders bevorzugt kann er so weit verfahren werden, dass er durch das Knie eines Benutzers aktiviert werden kann. Bevorzugt ist aus Gründen der Arbeitssicherheit und zur Erleichterung der Bedienung der Laser sichtbar, es ist jedoch auch möglich, unsichtbare Laser (beispielsweise Infrarotlaser) einzusetzen.

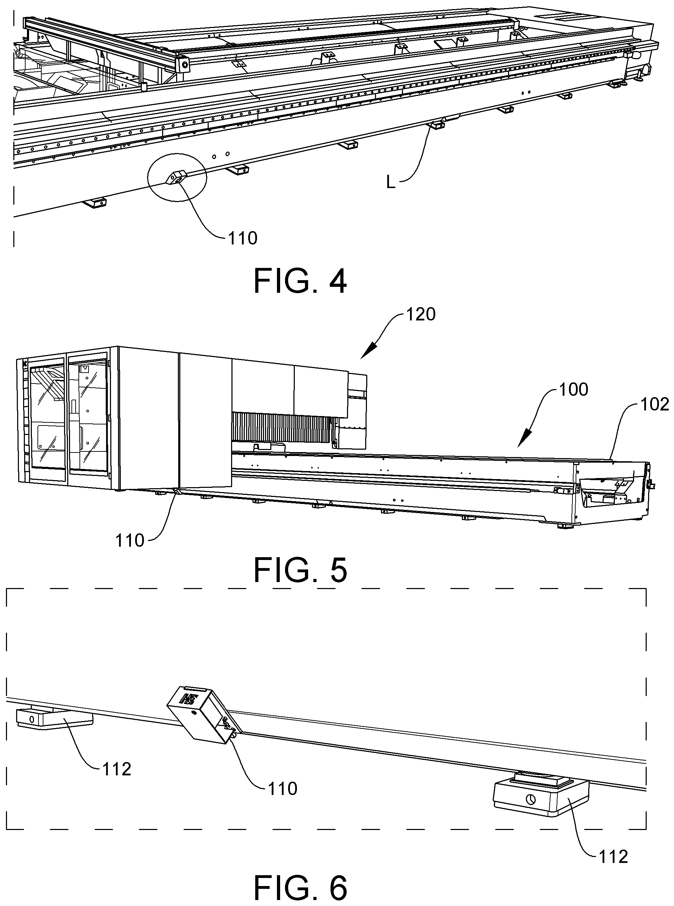

Der durch den Sensor 110 erfassbare Bereich ist beispielsweise in der Figur 4 dargestellt, wo der Bereich durch den Laserstrahl L, der von dem Sensor 110 ausgeht, dargestellt ist. Insofern kann der Sensor nicht nur Strahlung oder Wellen empfangen, sondern auch Strahlung oder Wellen aussenden.

Durch einen solchen Sensor 110 ist es möglich, die Betätigungsfunktion veränderlich zu gestalten. Es ist somit nicht mehr nötig, pro Betätigungsposition einen separaten, an dieser Position angeordneten Schalter vorzusehen.

Es ist möglich, dass das Signal des Distanzsensors 110 über eine Eingabe- bzw. Ausgabeschaltung direkt in eine speicherprogrammierte Steuerung (SPS) eingegeben wird, um dort funktional verarbeitet zu werden. So kann ein sequenzielles Signal mit Messergebnissen gefiltert, gebündelt und ausgewertet werden. Somit können Fehlmessungen logisch ausgefiltert werden, die sich beispielsweise durch ein unbeabsichtigtes Eindringen des Fußes F in den Laserstrahl L ergeben oder aber die durch ein Herabfallen von Staub und/oder Holzspäne entstehen. Es ist auch möglich, unterschiedlichen Messergebnissen des Distanzsensors 110 unterschiedliche Schaltaufgaben zuzuordnen. So kann beispielsweise ein Messergebnis in einem Bereich, beispielsweise von 0 bis 2000, das Schalten von Platz 1 bedeuten, während ein Messergebnis von 2200 bis 4200 das Schalten von Platz 2 bedeuten kann.

Ein Schaltvorgang kann durch ein optisches Feedback angezeigt werden. Dies kann beispielsweise durch das Aufblinken einer farbigen LED oder durch einen RGB-Leuchttaster geschehen. Es ist jedoch auch möglich, ein akustisches oder haptisches Feedback (beispielsweise durch Vibrieren) zu verwenden.

Es ist auch möglich, den Sensor 110 für verschiedene Belegungsarten zu verwenden. Sogar ist es möglich, eine Ein-Platz- bis Vier-Platz-Bewegung zu haben, ohne dass man dazu mehrere Schalter verwenden kann. Allgemein kann man mit dem gleichen Distanzsensor in Verbindung mit der Maschinensteuerung mehrere Plätze belegen, ohne auf eine obere Grenze von vier Plätzen eingeschränkt zu sein. Insofern reicht es aus, einen einzigen Distanzsensor-Schalter pro Vorrichtung vorzusehen, und man muss nicht mehr einen Schalter pro Platz verwenden. Es ist auch möglich, durch verschiedene Distanzmessergebnisse verschiedene Schaltaufgaben durchzuführen, wie dies weiter oben erwähnt worden ist. Unter einem Schalter wird u.a. ein Distanz-Sensor verstanden, der in Verbindung mit der Maschinen-Steuerung Schaltvorgänge auslösen kann. Er wird hier erfindungsgemäß als Fußschalter verwendet. Bei den bisherigen mechanischen Fußschaltern waren für eine Mehrplatz-Belegung immer auch mehrere Fußschalter erforderlich. Also pro zu schaltenden Aufspann-Platz musste ein mechanischer Fußschalter vorgehalten werden. Mit dem optischen Fußschalter können theoretisch fast unbegrenzt viele Aufspannplätze geschaltet werden, indem dem jeweiligen Aufspannplatz ein bestimmter Abstands-Bereich zum Sensor als aktive Schalter-Länge zugeordnet wird.

Mit einer entsprechenden Ausgestaltung kann die Fußschalterlänge jeweils der entsprechenden und erforderlichen Platzgröße (Länge (X) des jeweiligen Aufspannplatzes) angepasst werden im Rahmen einer Ein-Platz-, Zwei-Platz- oder Vier-Platz-Belegung. Das heißt, indem dem Distanz-Sensor durch die Maschinensteuerung unterschiedliche aktive Schaltbereiche zugeordnet werden können, kann dieser Schaltbereich individuell dem jeweiligen Aufspannplatz zugeordnet werden. Hierbei entsprechen die Schaltbereiche jeweils der Platzgröße. Zur Erhöhung der Sicherheit sind oft Abstände bzw. Sicherheitsbereiche zwischen den Schaltbereichen vorgesehen, um eine Fehlaktivierung zu vermeiden. In Ausführungsformen haben diese eine Größe von ca. 200 bis 300 mm.

In der Figur 5 ist eine Gesamtansicht einer CNC-Vorrichtung 100 vorgesehen, die ferner eine Bearbeitungseinrichtung 120 aufweist, die bezüglich einer Aufspannfläche 102 der Vorrichtung 100 verfahrbar angeordnet ist. Die Bearbeitungseinrichtung 120 kann bezüglich der Aufspannfläche 102 verschoben werden, um somit auf der Aufspannfläche 102 angeordnete Werkstücke zu bearbeiten.

Die Figur 6 zeigt ferner eine Detailansicht eines Sensors 110, der zwischen zwei Füßen 112 der Vorrichtung 100 angeordnet ist. Dieser Sensor 110 dient dazu, den Abstand bzw. die Bewegung eines Fußes F zu erfassen.

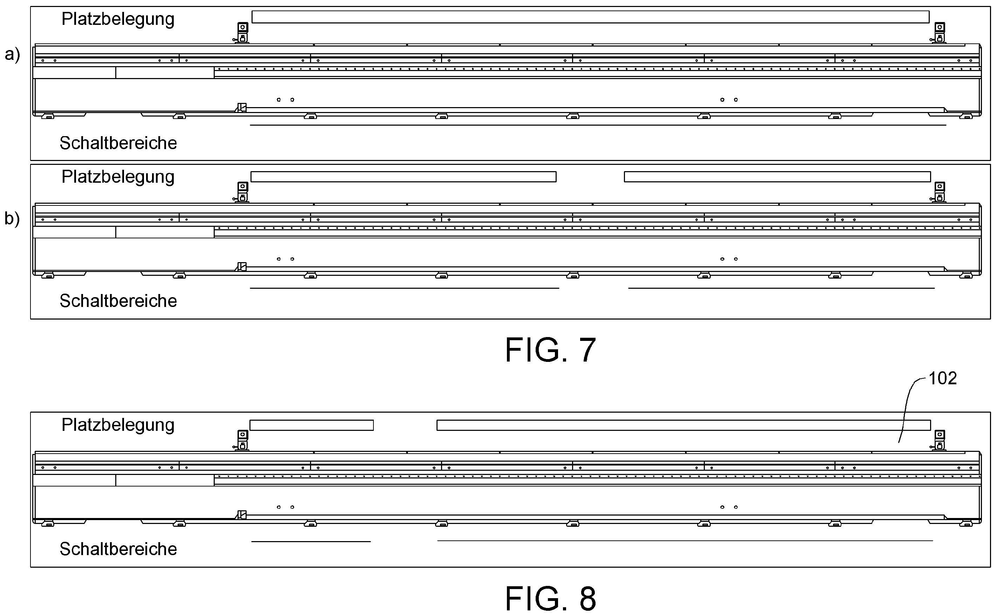

Die Figur 7 zeigt weiterhin, wie man die Schalterlänge bzw. die Länge der Schaltbereiche, die dem Sensor 110 zugeordnet sind, optimal ausgestalten kann. Da in der ersten Figur 7a) sich ein einziges Werkstück über die gesamte Platzlänge erstreckt, ist auch der entsprechende Schaltbereich so gewählt, dass er sich über die gesamte Länge der Aufspannfläche erstreckt. Wenn jedoch (siehe Figur 7b)) zwei Werkstücke vorgesehen sind, sind entsprechend auch zwei voneinander beabstandete Schaltbereiche vorgesehen, die separat angesteuert werden können.

Ebenso ist es auch möglich, die Platzgröße dynamisch anzupassen, wie dies in Figur 8 dargestellt ist. So ist der linke Platz auf der Aufspannfläche 102 deutlich kleiner als der Platz auf der Aufspannfläche 102, der von dem zweiten Werkstück belegt ist. Entsprechend sind auch die Schaltbereiche unterschiedlich dimensioniert. Somit werden, wenn im Rahmen der dynamischen Platzbelegung die Plätze des 4000er Arbeitsfelds nicht 2000/2000 aufgeteilt werden können, sondern beispielsweise 1000/3000, die Längen der Schaltbereiche entsprechend dynamisch auf 1000/3000 angepasst. So können bei Fenstermaschinen die Anzahl der Fußschalter (bzw. die aktiven Schaltbereiche) und die Fußschalterlängen jeweils entsprechend der Anzahl und der Werkstücklängen der Stabteile, insbesondere Fenster-Rahmenteile oder allgemein stabförmige Werkstücke angepasst werden. Somit ist es nicht mehr nötig, Vorwahltaster an einer Konsole vorzusehen.

Erfindungsgemäß sind verschiedene programmierbare Funktionen möglich, die sich bei der Auswertung des Messsignals ergeben und verschiedenen Sicherheitsfunktionen dienen. Ferner wird das Design der Maschinenständerfront durch den Wegfall der mechanischen Fußschalterleisten aufgewertet. Auch wird die Ergonomie durch eine neue Mulde M an der Unterseite der Aufspannfläche zusätzlich verbessert, in die der Fuß eines Bedieners bei der Bedienung eindringen kann (siehe Fig. 3). In der Nähe dieser Mulde M kann ein Blech vorgesehen sein, um eine versehentliche Betätigung des DistanzSensors 110 zu vermeiden.

Auch ist es nicht mehr nötig, die Komponenten der Fußschaltersysteme für den Transport zu demontieren, da der Sensor deutlich kleiner ist. Dies ermöglicht und erhöht die Transportierbarkeit der Vorrichtung.

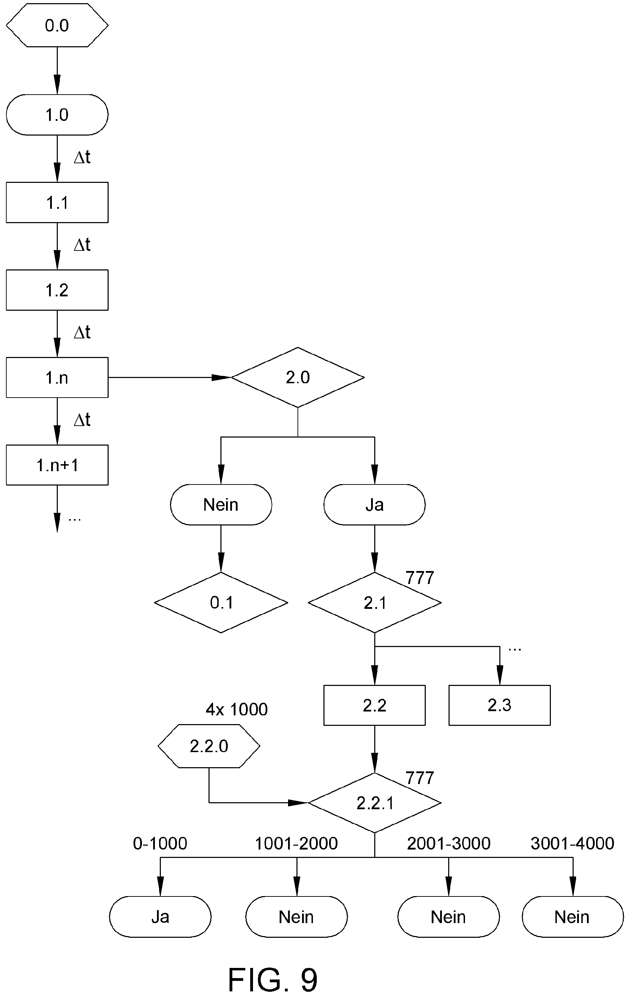

Figur 9 zeigt eine Ausführungsform eines erfindungsgemäßen Verfahrens. Bei Schritt 0.0 wird ein Distanzsensor 110 aktiviert. Bei Schritt 1.0 ist der Laserstrahl infolge eines Körperteils (beispielsweise Fuß oder Knie) des Bedieners das erste Mal unterbrochen. Nun werden bei den Zeitpunkten 1.1, 1.2, ..., 1.n, die sich jeweils um eine zeitliche Differenz Δt, bevorzugt einem Bruchteil einer Sekunde, unterscheiden, Messungen vorgenommen. Sofern beim Zeitpunkt 1.n immer noch eine Erfassung erfolgt, geht das Verfahren davon aus, dass die Unterbrechung des Laserstrahls absichtlich durch den Bediener durchgeführt wurde.

Anschließend wird (Schritt 2.0) überprüft, ob die Abstandsmesswerte im Bereich von beispielsweise +/- 10 mm konstant blieben. Wenn dies nicht der Fall ist (NO, Schritt 0.1), wird keine Aktion durchgeführt. Wenn dies jedoch der Fall ist (YES, Schritt 2.1), wird der neue Messwert verwendet. Der Messwert ist der Mittelwert der in der letzten Sekunde aufgenommenen Messwerte. So wird bei einem Messwert (2.2, Messwert UP1) auf die Konfiguration der Tischbelegung zugegriffen (Schritt 2.2.0) und diese umgeschaltet (Schritt 2.2.1), wie dies in der untersten Zeile der Fig. 9 angegeben ist. Mit diesem Messwert aus 2.1 können mit einem weiteren Unterprogramm (2.3) weitere Verfahren/Aktionen durchgeführt werden.

## Patentansprüche

1. Vorrichtung (100) zum Be- und/oder Verarbeiten von Werkstücken, die zumindest abschnittsweise aus Holz, Holzwerkstoffen, Kunststoffen oder dergleichen bestehen, mit:
- einem Eingabemittel (110), um ein Körperteil eines Benutzers, bevorzugt eine untere Extremität, insbesondere einen Fuß (F) oder ein Knie eines Benutzers und/oder das Werkstück kontaktlos zu erfassen,
wobei die Vorrichtung dazu ausgestaltet ist, basierend auf der Erfassung eine Betätigung auszuführen.

2. Vorrichtung nach Anspruch 1, wobei die Vorrichtung dazu ausgestaltet ist, eine Position des Körperteils entlang der Vorrichtung zu erfassen, wobei die Vorrichtung bevorzugt dazu ausgestaltet ist, eine sequenzielle Messung der Position des Körperteils und/oder Werkstücks durchzuführen, um die Position statistisch in Korrelation mit der Zeit zu erfassen, wobei die Vorrichtung stärker bevorzugt dazu ausgestaltet ist, verschiedene Bewegungsmuster des Körperteils und/oder Werkstücks zu erfassen, um somit verschiedene Betätigungen der Vorrichtung durchzuführen.

3. Vorrichtung nach einem der vorhergehenden Ansprüche, wobei das Eingabemittel dazu ausgestaltet ist, das Eindringen eines Körperteils und/oder des Werkstücks in einen definierten Raum zu erfassen, wobei die Vorrichtung bevorzugt dazu ausgestaltet ist, eine Betätigung nur dann auszuführen, wenn ein Eindringen des Körperteils und/oder des Werkstücks in den definierten Raum über einen Zeitraum erfolgt, der länger ist als ein definierter Schwellenwert und/oder wenn die Größe des in den definierten Raum eindringenden Objekts eine definierte Mindestgröße überschreitet.

4. Vorrichtung nach einem der vorhergehenden Ansprüche, wobei das Eingabemittel in seiner Höhe bezüglich des Fußbodens, auf dem sich der Benutzer bewegt, verstellbar, bevorzugt verfahrbar, angeordnet ist.

5. Vorrichtung nach einem der vorhergehenden Ansprüche, wobei die Vorrichtung dazu ausgestaltet ist, mindestens ein erstes Werkstück zu be- und/oder verarbeiten, das an einer Arbeitsfläche der Vorrichtung angeordnet ist, wobei die Vorrichtung dazu ausgestaltet ist, bei einer Erfassung des Körperteils oder des Werkstücks in einem ersten Bereich, der dem ersten Werkstück zugeordnet ist, eine Betätigung durchzuführen, die dem ersten Werkstück zugeordnet ist,
wobei der erste Bereich bevorzugt eine Erstreckung hat, die mit einer Abmessung des ersten Werkstücks korreliert und/oder
wobei die Vorrichtung dazu ausgestaltet ist, mindestens ein zweites Werkstück zu be- und/oder verarbeiten, das an einer Arbeitsfläche der Vorrichtung angeordnet ist, die sich von der Fläche unterscheidet, an der das erste Werkstück angeordnet ist, wobei die Vorrichtung dazu ausgestaltet ist, bei einer Erfassung des Körperteils und/oder des Werkstücks in einem zweiten Bereich, der dem zweiten Werkstück zugeordnet ist, eine Betätigung durchzuführen, die dem zweiten Werkstück zugeordnet ist, wobei der erste und der zweite Bereich verschieden sind,
wobei bevorzugt der zweite Bereich eine Erstreckung hat, die mit einer Abmessung des zweiten Werkstücks korreliert, wobei der erste und der zweite Bereich bevorzugt voneinander beabstandet sind.

6. Vorrichtung nach Anspruch 5, wobei die Vorrichtung dazu ausgestaltet ist, den ersten und/oder zweiten Bereich in ihren Abmessungen autonom basierend auf den Abmessungen der ersten und/oder zweiten Werkstücke anzupassen.

7. Vorrichtung nach einem der Ansprüche 5 bis 6, wobei die Betätigung, die dem ersten und/oder zweiten Werkstück zugeordnet ist, eine Be- und/oder Verarbeitung des ersten und/oder zweiten Werkstücks und/oder eine Veränderung der physischen Konfiguration der Vorrichtung, um eine Be- und/oder Verarbeitung des ersten und/oder zweiten Werkstücks durchzuführen, umfasst.

8. Vorrichtung nach einem der vorhergehenden Ansprüche, wobei das Eingabemittel einen oder mehrere Abstandssensoren, bevorzugt einen Abstandssensor unter Verwendung eines Lasers, Ultraschallsensors und/oder Radar umfasst und/oder ferner mit einer Einrichtung, die eine Erfassung des Körperteils und/oder Werkstücks sensorisch, bevorzugt optisch und/oder akustisch, oder durch die ausgeführte Betätigung ausgibt, wobei sich bevorzugt die sensorischen Ausgaben voneinander für verschiedene Betätigungen unterscheiden und/oder wobei die Erfassung mittels elektromagnetischer Strahlung, Radarstrahlung oder Infrarotstrahlung, mittels Ultraschallerzeugung, und/oder mittels elektromagnetischer Felder insbesondere von elektromagnetischen Spulen erfolgt, wobei die elektromagnetische Strahlung bevorzugt Laserstrahlung im optischen Bereich oder im Infrarotbereich oder Radarstrahlung umfasst.

9. Verfahren zum Be- und/oder Verarbeiten von Werkstücken, die zumindest abschnittsweise aus Holz, Holzwerkstoffen, Kunststoffen oder dergleichen bestehen, mit:
- dem kontaktlosen Erfassen eines Körperteils, bevorzugt einer unteren Extremität, insbesondere des Fußes oder Knies eines Benutzers oder eines Werkstücks, und
- dem Durchführen einer Betätigung einer Vorrichtung zum Be- und/oder Verarbeiten der Werkstücke basierend auf der Erfassung.

10. Verfahren nach Anspruch 9, wobei eine Position eines Körperteils und/oder Werkstücks kontaktlos erfasst wird, wobei das Verfahren bevorzugt dazu ausgestaltet ist, die Position des Körperteils und/oder Werkzeugs sequentiell zu erfassen, um die Position statistisch in Korrelation mit der Zeit zu erfassen, wobei stärker bevorzugt verschiedene Bewegungsmuster des Körperteils und/oder Werkstücks erfasst werden, um somit verschiedene Betätigungen der Vorrichtung durchzuführen.

11. Verfahren nach einem der Ansprüche 9 bis 10, wobei das Eindringen eines Körperteils und/oder Werkstücks in einen definierten Raum erfasst wird, wobei bevorzugt eine Betätigung nur dann ausgeführt wird, wenn ein Eindringen des Körperteils und/oder Werkstücks in den definierten Raum über einen Zeitraum erfolgt, der länger ist als ein definierter Schwellenwert und/oder wenn die Größe des in den definierten Raum eindringenden Objekts eine definierte Mindestgröße überschreitet.

12. Verfahren nach einem der Ansprüche 9 bis 11, wobei mindestens ein erstes Werkstück be- und/oder verarbeitet wird, das an einer Arbeitsfläche einer Vorrichtung angeordnet ist, wobei bei einer Erfassung des Körperteils und/oder Werkstücks in einem ersten Bereich, der dem ersten Werkstück zugeordnet ist, eine Betätigung durchgeführt wird, die dem ersten Werkstück zugeordnet ist,
wobei bevorzugt bei einer Erfassung des Werkstücks als Betätigung ein Bereich der Arbeitsfläche selektiert wird, dessen Größe mit der Größe des Werkstücks korreliert und/oder wobei die Arbeitsfläche als Betätigung in mehrere Bereiche aufgeteilt wird, so dass zusätzlich zu dem Werkstück eines oder mehrere andere Werkstücke bearbeitet werden können und/oder wobei der erste Bereich eine Erstreckung hat, die mit einer Abmessung des ersten Werkstücks korreliert.

13. Verfahren nach Anspruch 12, wobei die Vorrichtung dazu ausgestaltet ist, mindestens ein zweites Werkstück zu be- und/oder verarbeiten, das an einer Arbeitsfläche der Vorrichtung angeordnet ist und sich von der Fläche unterscheidet, an der das erste Werkstück angeordnet ist, wobei bei einer Erfassung des Körperteils und/oder des Werkstücks in einem zweiten Bereich, der dem zweiten Werkstück zugeordnet ist, eine Betätigung durchgeführt wird, die dem zweiten Werkstück zugeordnet ist, wobei der erste und der zweite Bereich verschieden sind,
wobei der zweite Bereich bevorzugt eine Erstreckung hat, die mit einer Abmessung des zweiten Werkstücks korreliert, wobei bevorzugt der erste und der zweite Bereich voneinander beabstandet sind und/oder wobei der erste und/oder zweite Bereich in ihren Abmessungen autonom basierend auf den Abmessungen und Anzahl der ersten und/oder zweiten Werkstücke angepasst werden.

14. Verfahren nach einem der Ansprüche 12 bis 13, wobei die Betätigung, die dem ersten und/oder zweiten Werkstück zugeordnet ist, eine Be- und/oder Verarbeitung des ersten und/oder zweiten Werkstücks und/oder eine Veränderung der physischen Konfiguration der Vorrichtung, um eine Be- und/oder Verarbeitung des ersten und/oder zweiten Werkstücks/Arbeitsfelds durchzuführen, umfasst.

15. Verfahren nach einem der Ansprüche 8 bis 14, ferner mit dem Schritt des sensorischen, bevorzugt optischen und/oder akustischen, Ausgebens der Betätigung eines Schaltvorgangs aufgrund der Erfassung eines Körperteils und/oder Werkstücks.
